# EUROPEAN PATENT APPLICATION

(11) **EP 4 742 307 A1**
(43) Date of publication of application: **13.05.2026**
(21) Application number: 25186636.4
(22) Date of filing: 01.07.2025
(51) Int. Cl.: H01M 4/04, B26D 1/04, B26D 7/01, H01M 10/04

(54) **APPARATUS FOR MANUFACTURING SECONDARY BATTERY AND ELECTRODE PLATE CUTTING UNIT FOR MANUFACTURING SECONDARY BATTERY**

(30) Priority: 06.11.2024 KR 20240156596
(71) Applicant: SAMSUNG SDI CO., LTD., Yongin-si, Gyeonggi-do 17084 (KR)
(72) Inventor: KWON, Junhwan, 17084 Yongin-si (KR); KIM, Jinhwan, 17084 Yongin-si (KR); IM, Jongmin, 17084 Yongin-si (KR); KANG, Bonggeun, 17084 Yongin-si (KR)
(74) Representative: Marks & Clerk LLP

(57) **Abstract**

The present disclosure provides an apparatus for manufacturing a secondary battery and an electrode plate cutting unit for manufacturing a secondary battery, which enable continuous cutting and prevents productivity from being lowered by supporting a cut front end after cutting an electrode plate to prevent the electrode plate from falling down a normal transport path. An apparatus for manufacturing a secondary battery includes a transport unit configured to transport an electrode plate along a transport path, a winding unit configured to receive and wind the electrode plate transported by the transport unit, and a cutting unit having a cutting part which cuts the electrode plate that is transported, and a separation prevention part which supports a front end portion of a subsequent electrode plate, which moves toward the winding unit, in a transport direction after cut by the cutting part to prevent the subsequent electrode plate from deviating from the transport path toward the winding unit.

## Description

### FIELD

The present disclosure relates to manufacturing a secondary battery, and more specifically, to an apparatus for manufacturing a secondary battery and an electrode plate cutting unit for manufacturing a secondary battery.

### BACKGROUND

Secondary batteries are batteries that can be charged and discharged, unlike primary batteries that cannot be recharged. A secondary battery may generally include an electrode assembly including a positive electrode plate, a separator, and a negative electrode plate, a case (or a can) for accommodating the electrode assembly, a substrate tab formed by extending an uncoated portion of each electrode plate of the electrode assembly, an external terminal connected to the substrate tab, and the like.

The electrode assembly accommodated in the case includes a stack type and a jelly roll type. The jelly roll type electrode assembly is manufactured by winding continuously supplied electrode plates using a winding device. The winding device includes an electrode plate cutting machine. The electrode plate cutting machine is a device for cutting an electrode plate at a designed interval and includes an upper cutter and a lower cutter. However, conventional electrode plate cutting devices cut an electrode plate, and then the electrode plate may easily deviate downwardly by the tension of a cut front end.

The herein information disclosed in this Background section is for enhancement of understanding of the background of the present disclosure, and therefore, it may contain information that does not constitute a related (or prior) art.

### SUMMARY

The present disclosure is directed to providing an apparatus for manufacturing a secondary battery and an electrode plate cutting unit for manufacturing a secondary battery, which enable continuous cutting by supporting a cut front end after cutting an electrode plate to prevent the electrode plate from falling down a normal transport path.

According to an aspect of the present disclosure, there is provided an apparatus for manufacturing a secondary battery, which includes a transport unit configured to transport an electrode plate along a transport path, a winding unit configured to receive and wind the electrode plate transported by the transport unit, and a cutting unit having a cutting part which cuts the electrode plate that is transported, and a separation prevention part which supports a front end portion of a subsequent electrode plate, which moves toward the winding unit, in a transport direction, after being cut by the cutting part, to prevent the subsequent electrode plate from deviating from the transport path toward the winding unit.

In some embodiments, the cutting part comprises an upper cutter installed above the transport path of the electrode plate, and a lower cutter installed below the transport path to cut the electrode plate through cross motion with the upper cutter, and the separation prevention part supports the front end portion of the subsequent electrode plate in the transport direction to prevent the front end portion from sagging downwardly due to gravity.

In some embodiments, the separation prevention part comprises: a lower moving guide which supports the lower cutter while installed on a side portion of the lower cutter and is movable upwardly and downwardly; and a first guide driving part configured to move the lower moving guide upwardly and downwardly.

In some embodiments, after the cutting part cuts the electrode plate, the first guide driving part moves the lower moving guide upwardly simultaneously when the upper cutter moves upwardly so that the lower moving guide provides an upward support force to the front end portion of the subsequent electrode plate.

In some embodiments, the separation prevention part comprises: an upper moving guide installed to be movable upwardly and downwardly on a side portion of the upper cutter; and a second guide driving part configured to move the upper moving guide upwardly and downwardly.

In some embodiments, the upper moving guide is positioned above the transport path of the electrode plate, and after the cutting part cuts the electrode plate, the second guide driving part moves the upper moving guide downwardly when the upper cutter moves upwardly so that the upper moving guide provides an upward support force to the front end portion of the subsequent electrode plate.

In some embodiments, a lower fixed guide, which fixedly supports the lower cutter and comes into contact with the upper moving guide when the upper moving guide moves downwardly, is further installed vertically under the upper moving guide.

In some embodiments, an upper fixed guide, which comes into contact with the lower moving guide when the lower moving guide moves upwardly, is further installed vertically above the lower moving guide.

In some embodiments, a surface of the lower moving guide is coated with an antistatic layer.

In some embodiments, a surface of the upper moving guide is coated with an antistatic layer.

According to another aspect of the present disclosure, there is provided an electrode plate cutting unit including an upper cutter installed above a transport path of an electrode plate transported along the transport path, a lower cutter installed below the transport path to cut the electrode plate, and a separation prevention part which supports a front end portion of the electrode plate cut by the upper cutter and the lower cutter to prevent the electrode plate from sagging downwardly and deviating from the transport path.

In some embodiments, the separation prevention part supports the front end portion of a subsequent electrode plate in a transport direction to prevent the front end portion from sagging downwardly due to an action of gravity.

In some embodiments, the separation prevention part comprises: a lower moving guide which supports the lower cutter while installed on a side portion of the lower cutter and is movable upwardly and downwardly; and a first guide driving part configured to move the lower moving guide upwardly and downwardly.

In some embodiments, after the cutting part cuts the electrode plate, the first guide driving part moves the lower moving guide upwardly simultaneously when the upper cutter moves upwardly so that the lower moving guide provides an upward support force to the front end portion of the subsequent electrode plate.

In some embodiments, the separation prevention part comprises: an upper moving guide installed to move upwardly and downwardly on a side portion of the upper cutter; and a second guide driving part configured to move the upper moving guide upwardly and downwardly.

In some embodiments, the upper moving guide is positioned above the transport path of the electrode plate, and after the cutting part cuts the electrode plate, the second guide driving part moves the upper moving guide downwardly when the upper cutter moves upwardly so that the upper moving guide provides an upward support force to the front end portion of the subsequent electrode plate.

In some embodiments, a lower fixed guide, which fixedly supports the lower cutter and comes into contact with the upper moving guide when the upper moving guide moves downwardly, is further installed vertically under the upper moving guide.

In some embodiments, an upper fixed guide, which comes into contact with the lower moving guide when the lower moving guide moves upwardly, is further installed vertically above the lower moving guide.

In some embodiments, a surface of the lower moving guide is coated with an antistatic layer.

In some embodiments, a surface of the upper moving guide is coated with an antistatic layer.

The present disclosure also provides a method of using the apparatus or electrode plate cutting unit for cutting an electrode plate for use in manufacture of a secondary battery.

At least some of the above and other features of the invention are set out in the claims.

Aspects and features of the present disclosure are not limited to those described herein, and other aspects and features not specifically mentioned herein will be clearly understood by those skilled in the art from the description of the present disclosure herein.

### BRIEF DESCRIPTION OF THE DRAWINGS

The herein and other objects, features and advantages of the present disclosure will become more apparent to those of ordinary skill in the art by describing embodiments thereof in detail with reference to the accompanying drawings, in which:
FIG. 1 is a schematic view illustrating an electrode assembly of a secondary battery which may be manufactured through an apparatus for manufacturing a secondary battery according to embodiments of the present disclosure;
FIG. 2 is a view illustrating an interior of a pouch-type battery to which the electrode assembly of FIG. 1 is applied;
FIG. 3 is a cross-sectional view illustrating a cylindrical battery manufactured through the apparatus for manufacturing a secondary battery according to embodiments of the present disclosure;
FIG. 4 is a perspective view illustrating an exterior of a prismatic battery which may be manufactured through the apparatus for manufacturing a secondary battery according to embodiments of the present disclosure;
FIG. 5 is a cross-sectional view along line A-A in FIG. 4;
FIGS. 6 to 10 are views for describing a configuration and operation method of the apparatus for manufacturing a secondary battery to which a cutting unit according to embodiments of the present disclosure is applied;
FIGS. 11 to 13 are views illustrating another example of the apparatus for manufacturing a secondary battery according to embodiments of the present disclosure;
FIGS. 14 to 16 are views illustrating still another example of the apparatus for manufacturing a secondary battery according to embodiments of the present disclosure;
FIGS. 17 to 19 are views illustrating yet another example of the apparatus for manufacturing a secondary battery according to embodiments of the present disclosure;
FIGS. 20 to 22 are views illustrating yet another example of the apparatus for manufacturing a secondary battery according to embodiments of the present disclosure;
FIG. 23 is a cross-sectional view illustrating a modified example of a moving guide included in the apparatus for manufacturing a secondary battery according to embodiments of the present disclosure; and
FIG. 24 is a cross-sectional view illustrating a modified example of a fixed guide included in the apparatus for manufacturing a secondary battery according to embodiments of the present disclosure.

### DETAILED DESCRIPTION

Hereinafter, embodiments of the present disclosure will be described, in detail, with reference to the accompanying drawings. The terms or words used in the present specification and claims are not to be narrowly interpreted according to their general or dictionary meanings and should be interpreted as having meanings and concepts that are consistent with the technical idea of the present disclosure on the basis of the principle that an inventor can be his/her own lexicographer to appropriately define concepts of terms to describe his/her disclosure in the best way.

The embodiments described in this specification and the configurations shown in the drawings are only some embodiments of the present disclosure and do not represent all of the aspects, features, and embodiments of the present disclosure. Accordingly, it should be understood that there may be various equivalents and modifications that can replace or modify one or more embodiments or features therein described herein at the time of filing this application.

It will be understood that if an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed herein could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of patent rules.

References to two compared elements, features, etc. as being "the same" may mean that they are "substantially the same." Thus, the phrase "substantially the same" may include a case having a deviation that is considered low in the art, for example, a deviation of 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to limit the present disclosure.

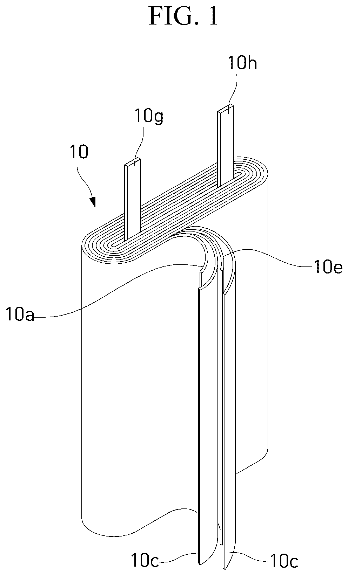

FIG. 1 is a schematic view illustrating an electrode assembly of a secondary battery which may be manufactured through an apparatus for manufacturing a secondary battery according to embodiments of the present disclosure.

An electrode assembly 10 may be formed by winding or stacking a first electrode plate 10a, a separator 10c, and a second electrode plate 10e, each of which are formed as thin plates or films.

In embodiments, the electrode assembly 10 may be a stack type rather than a winding type, and the shape of the electrode assembly 10 is not limited in the present disclosure. In addition, the electrode assembly 10 may be a Z-stack electrode assembly in which a positive electrode plate and a negative electrode plate are inserted into both sides (e.g., opposite sides) of a separator, which is then bent (or folded) into a Z-stack

In addition, one or more electrode assemblies may be stacked (e.g., arranged) such that long sides of the electrode assemblies are adjacent to each other and accommodated in a case, and the number of electrode assemblies in a case is not limited in the present disclosure. The first electrode plate 10a of the electrode assembly 10 may act as a negative electrode, and the second electrode plate 10e may act as a positive electrode. Of course, the reverse is also possible.

The first electrode plate 10a may be formed by applying (e.g., coating or depositing) a first electrode active material, such as graphite or carbon, onto a first electrode substrate formed of a metal foil, such as copper, a copper alloy, nickel, or a nickel alloy. The first electrode plate 10a may include a first electrode tab 10g (e.g., a first uncoated portion), which is a region to which the first electrode active material is not applied. The first electrode tab 10g may be connected to an external first terminal. In some embodiments, when the first electrode plate 10a is manufactured, the first electrode tab 10g may be formed by being cut in advance to protrude to (or protrude from) one side of the electrode assembly 10, or the first electrode tab 10g may protrude to one side of the electrode assembly 10 more than (e.g., farther than or beyond) the separator 10c without being separately cut.

The second electrode plate 10e may be formed by applying (e.g., coating or depositing) a second electrode active material, such as a transition metal oxide, onto a second electrode substrate formed of a metal foil, such as aluminum or an aluminum alloy. The second electrode plate 10e may include a second electrode tab 10h (e.g., a second uncoated portion), which is a region to which the second electrode active material is not applied. The second electrode tab 10h may be connected to an external second terminal. In some embodiments, the second electrode tab 10h may be formed by being cut in advance to protrude to the other side (e.g., the opposite side) of the electrode assembly 10 when the second electrode plate 10e is manufactured, or the second electrode plate 10e may protrude to the other side of the electrode assembly more than (e.g., farther than or beyond) the separator 10c without being separately cut.

The separator 10c prevents a short-circuit between the first electrode plate 10a and the second electrode plate 10e while allowing movement of lithium ions therebetween. The separator 10c may be made of, for example, a polyethylene film, a polypropylene film, a polyethylene-polypropylene film, or the like.

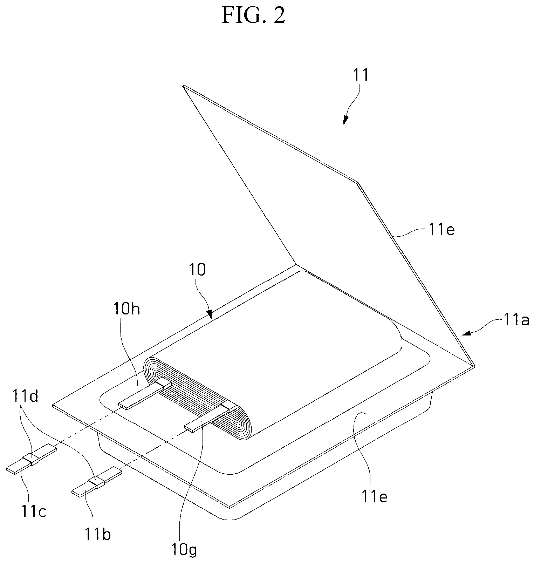

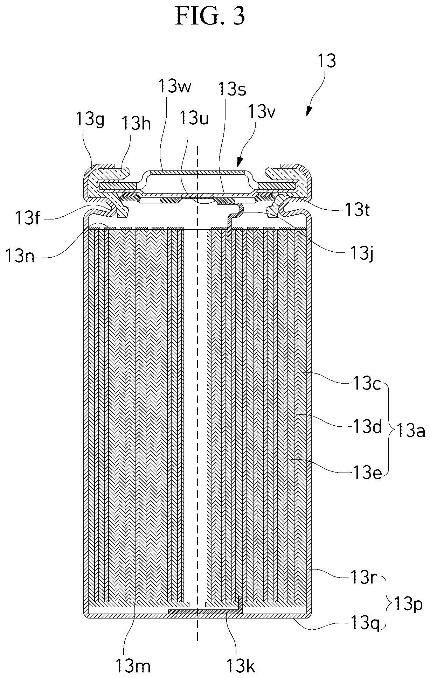

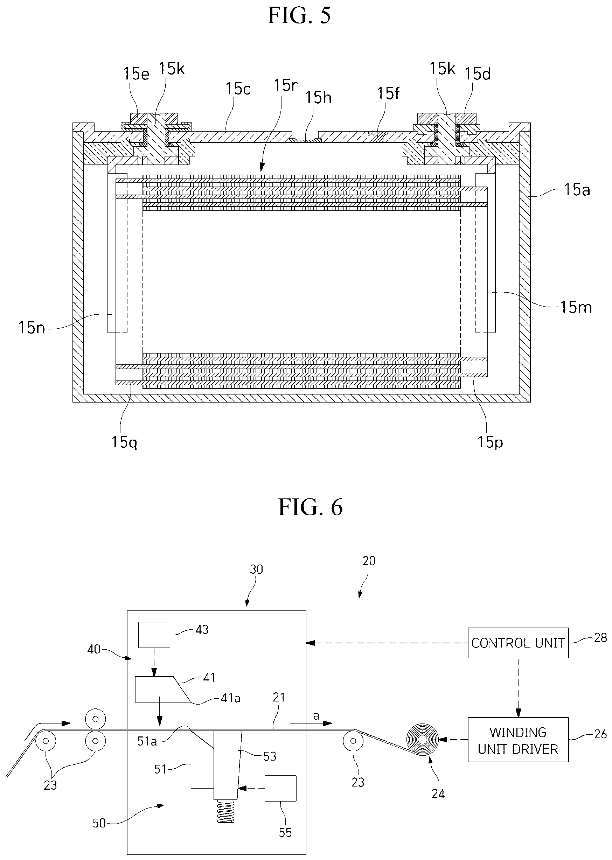

In some embodiments, the electrode assembly 10 may be accommodated in a case along with an electrolyte. In a pouch-type secondary battery, an electrode assembly 10 may be accommodated in a pouch made of flexible material (see, e.g., FIG. 2). In a cylindrical or prismatic secondary battery, an electrode assembly 10 may be accommodated in a cylindrical or prismatic metal casing (see, e.g., FIGS. 3 and 5).

A description is given of materials that can be used for the electrode plate of the herein electrode assembly.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b- c}Mn_{d}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); LiₐFePO₄ (0.90≤a≤1.8).

In the herein formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L1 is Mn, Al, or a combination thereof.

A positive electrode for a lithium secondary battery may include a substrate and a positive electrode active material layer formed on the substrate. The positive electrode active material layer may include a positive electrode active material and may further include a binder and/or a conductive material.

The content of the positive electrode active material is in a range of about 90 wt% to about 99 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The substrate may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x ≤ 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particles and an amorphous carbon coating layer on the surface of the core.

A negative electrode for a lithium secondary battery may include a substrate and a negative electrode active material layer disposed on the substrate. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode substrate, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film including two or more layers thereof may be used.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer including (or containing) an organic material and a coating layer including (or containing) an inorganic material that are stacked on each other.

FIG. 2 is a view illustrating an interior of a pouch-type battery to which the electrode assembly of FIG. 1 is applied.

The pouch-type secondary battery includes an electrode assembly 10 and a pouch 11a that accommodates the electrode assembly 10.

The electrode assembly 10 is the same as that illustrated in FIG. 1. The first electrode tab 10g and the second electrode tab 10h of the electrode assembly 10 may be electrically connected to respective external first and second terminal leads 11b and 11c by welding. Each of the first terminal lead 11b and the second terminal lead 11c may be attached with a tab film 11d for insulation from the pouch 11a.

The pouch 11a may be sealed by having sealing parts 11e at the edges thereof that come into contact with each other, accommodating the electrode assembly 10 therein, in which case the sealing may be achieved with the tab film 11d interposed between the sealing parts 11e. The sealing parts 11e of the pouch 11a may each be made of a thermal fusion material that generally has weak adhesion to metal. Thus, it may be fused to the pouch 11a by interposing the thin tab film 11d between the sealing parts 11e.

FIG. 3 is a cross-sectional view illustrating a cylindrical battery manufactured through the apparatus for manufacturing a secondary battery according to embodiments of the present disclosure.

The cylindrical battery 13 includes an electrode assembly 13a, a case 13p accommodating the electrode assembly 13a and an electrolyte therein, a cap assembly 13v coupled to an opening of the case 13p to seal the case 13p, and an insulating plate 13n positioned between the electrode assembly 13a and the cap assembly 13v inside the case.

The electrode assembly 13a may include a separator 13d and a first electrode 13c and a second electrode 13e positioned with the separator interposed therebetween and may be wound in a jelly-roll shape.

The first electrode 13c includes a first substrate and a first active material layer on the first substrate. A first lead tab 13j may extend outwardly from a first uncoated portion of the first substrate at where the first active material layer is not located, and the first lead tab 13j may be electrically connected to the cap assembly 13v.

The second electrode 13e includes a second substrate and a second active material layer on the second substrate. A second lead tab 13k may extend outwardly from a second uncoated portion of the second substrate at where the second active material layer is not located, and the second lead tab 13k may be electrically connected to the case 10. The first lead tab 13j and the second lead tab 13k may extend in opposite directions.

The first electrode 13c may act as a positive electrode. In such an embodiment, the first substrate may be made of, for example, an aluminum foil, and the first active material layer may include, for example, a transition metal oxide. The second electrode 13e may act as a negative electrode. In such an embodiment, the second substrate may be made of, for example, a copper foil or a nickel foil, and the second active material layer may include graphite, for example.

The separator 13d prevents a short circuit between the first electrode 13c and the second electrode 13e while allowing movement of lithium ions therebetween. The separator 13d may be made of, for example, a polyethylene film, a polypropylene film, a polyethylene-polypropylene film, or the like.

The case 13p accommodates the electrode assembly 13a and, together with the cap assembly 13v, forms the external appearance of the secondary battery. The case 13p may have a substantially cylindrical body portion 13r and a bottom portion 13q connected to one side (e.g., to one end) of the body portion 13r. A beading part 13f (e.g., a bead) deformed inwardly may be formed in the body portion 13r, and a crimping part 13g (e.g., a crimp) bent inwardly may be formed at an open end of the body portion 13r.

The beading part 13f can reduce or prevent movement of the electrode assembly 13a inside the case 13p and can facilitate seating of the gasket 13h and the cap assembly 13v. The crimping part 13g may firmly fix the cap assembly 13v by pressing the edge of the cap assembly 13v against the gasket 13h. The case 13p may be formed of steel plated with nickel, for example.

The cap assembly 13v may be fixed to the inside of the crimping part 13g by the gasket 13h to seal the case 13p. The cap assembly 13v may include a cap up 13w, a safety vent 13s, a cap down 13t, an insulating member, and a subplate 13u, but is not limited to these examples and may be modified in various ways.

The cap up 13w may be positioned at the uppermost part of the cap assembly 13v. The cap up 13w may include a terminal part that protrudes upwardly and is connected to an external circuit, and an outlet for discharging gas may be arranged around the terminal part.

The safety vent 13s may be located under the cap up 13w. The safety vent 13s may include a protrusion part that protrudes convexly downwardly and is connected to the sub plate 13u, and at least one notch may be formed in the safety vent 13s around the protrusion part.

When gas is generated due to overcharging or abnormal operation of the secondary battery, the protrusion part is deformed upwardly by the pressure and separates from the sub plate 13u while the safety vent 13s is cut (e.g., bursts or tears) along the notch. The cut safety vent 13s may prevent the secondary battery from exploding by allowing for the gas to be discharged to the outside.

The cap down 13t may be below the safety vent 13s. The cap down 13t may have a first opening for exposing the protrusion part of the safety vent 13s and a second opening for gas discharge. The insulating member may be positioned between the safety vent 13s and the cap down 13t to insulate the safety vent 13s and the cap down 13t.

The sub plate 13u may be under the cap down 13t. The sub plate 13u may be fixed to a lower surface of the cap down 13t to block the first opening of the cap down 13t, and the protrusion part of the safety vent 13s may be fixed to the sub plate 13u. The first lead tab 13j, which is drawn out from the electrode assembly 13a, may be fixed to the sub plate 13u. Accordingly, the cap up 13w, the safety vent 13s, the cap down 13t, and the sub plate 13u may be electrically connected to the first electrode 13c of the electrode assembly 13a.

The insulating plate 13n may be positioned to be in contact with the electrode assembly 13a below the beading part 13. The insulating plate 13n may have a tab opening through which the first lead tab 13j is drawn out. The cap assembly 13v, which is electrically connected to the first electrode 13c by the first lead tab 13j, may face the electrode assembly 13a with the insulating plate 13n interposed therebetween and may maintain a state of being insulated (e.g., electrically insulated) from the electrode assembly 13a by the insulating plate 13n. Meanwhile, another insulating plate 13m may be included for insulation between the electrode assembly 13a and the bottom portion 13q of the case 13p.

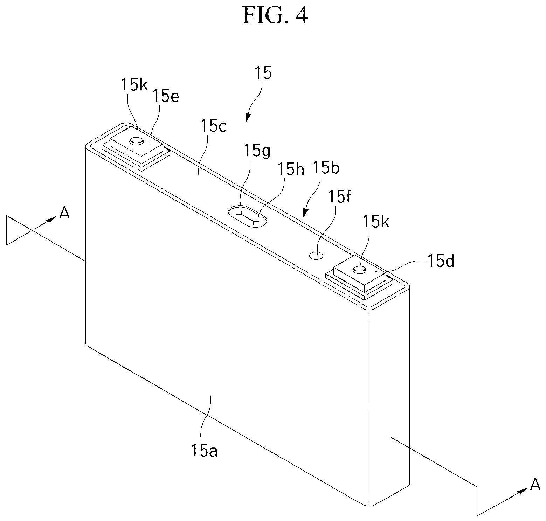

FIG. 4 is a perspective view illustrating an exterior of a prismatic battery which may be manufactured through the apparatus for manufacturing a secondary battery according to embodiments of the present disclosure.

A case 15a forms the overall appearance of a prismatic battery and may be formed of a conductive metal such as aluminum, aluminum alloy, or nickel-plated steel. In addition, the case 15a may provide a space for accommodating an electrode assembly therein.

A cap assembly 15b may include a cap plate 15c that covers the opening of the case 15a. In some examples, the case 15a and the cap plate 15c may be made of a conductive material. Here, a first terminal 15d and a second terminal 15e may be electrically connected to respective positive and negative (or negative and positive) electrodes inside the case, and may be installed to protrude outward through the cap plate 15c.

An electrolyte inlet 15f may be formed in the cap plate 15c, a gas discharge hole 15g may be opened, and a vent, i.e., a gas discharge device 15h may be connected to the gas discharge hole 15g. The gas discharge device 15h is opened by gas generated inside the battery and performs a degassing function.

FIG. 5 is a cross-sectional view along line A-A in FIG. 4.

An electrode assembly 13a may be formed by winding or stacking a first electrode plate, a separator, and a second electrode plate. When the electrode assembly 15r is a wound type, a winding axis may be parallel to the longitudinal direction of the case. In some other embodiments, the electrode assembly 15r is a stack type rather than a winding type. The shape of the electrode assembly 15r is not limited in the present disclosure.

In addition, the electrode assembly 15r may be a Z-stack electrode assembly in which a positive electrode plate and a negative electrode plate are inserted into both sides of a separator, which is then bent into a Z-stack. In addition, one or more electrode assemblies 15r may be stacked such that long sides of the electrode assemblies are adjacent to each other and accommodated in the case, and the number of electrode assemblies in the case is not limited in the present disclosure. The first electrode plate of the electrode assembly 15r may act as a negative electrode, and the second electrode plate may act as a positive electrode. Of course, the reverse is also possible.

The first electrode plate may be formed by applying a first electrode active material, such as graphite, carbon, or the like, to a first electrode current collector formed of a metal foil, such as copper, a copper alloy, nickel, a nickel alloy, or the like. The first electrode plate may include a first electrode tab 43 (e.g., a first uncoated portion) that is a region to which the first electrode active material is not applied. The first electrode tab 15p may act as a current flow path between the first electrode plate and the first current collector 15m. In some embodiments, when the first electrode plate is manufactured, the first electrode tab 15p is formed by being cut in advance to protrude to one side of the electrode assembly, or the first electrode tab protrudes to one side of the electrode assembly more than (e.g., farther than or beyond) the separator without being separately cut.

The second electrode plate may be formed by applying a second electrode active material, such as a transition metal oxide, on a second electrode current collector formed of a metal foil, such as aluminum or an aluminum alloy. The second electrode plate may include a second electrode tab 15q (e.g., a second uncoated portion) that is a region to which the second electrode active material is not applied. The second electrode tab 15q may act as a current flow path between the second electrode plate and the second current collector 15n. In some embodiments, the second electrode tab 15q may be formed by being cut in advance to protrude to the other side (e.g., the opposite side) of the electrode assembly when the second electrode plate is manufactured, or the second electrode plate may protrude to the other side of the electrode assembly more than (e.g., farther than or beyond) the separator without being separately cut.

In FIG. 5, the first electrode tab 15p and the second electrode tab 15q are illustrated as being positioned on the right side and the left side of the electrode assembly 15r, respectively. However, in some other embodiments, both the first electrode tab 15p and the second electrode tab 15q may be positioned together on the right side or the left side of the electrode assembly 15r.

Here, the left side and the right side of the electrode assembly 15r are based on the battery illustrated in FIG. 5 for convenience of explanation. The left side refers to the side of the vertical surface of the electrode assembly 15r to which the second current collector 15n is joined, and the right side refers to the opposite side to which the first current collector 15m is joined. Therefore, the terms "left side" and "right side" of the electrode assembly 15r used herein may vary when the battery rotates left and right or up and down.

The separator prevents or substantially reduces instances of a short circuit between the first electrode and the second electrode while allowing movement of lithium ions therebetween. The separator may be made of, for example, a polyethylene film, a polypropylene film, a polyethylene-polypropylene film, or the like.

In some embodiments, an electrode assembly 15r is accommodated in the case 15a along with an electrolyte.

In the electrode assembly 15r, the first current collector 15m and the second current collector 15n may be welded and connected to the first electrode tab 15p extending from the first electrode plate and the second electrode tab 15q extending from the second electrode plate, respectively.

As illustrated in FIG. 5, the first current collector 15m and the second current collector 15n are connected to the first terminal 15d and the second terminal 15e through connection members 15k, respectively. In some embodiments, the connection members 15k may each have an outer peripheral surface that is threaded, and may be fastened to the first terminal 15d and the second terminal 15e by screwing. However, the present disclosure is not limited thereto. For example, the connection members 15k may also be coupled to the first terminal 15d and the second terminal 15e by riveting or welding.

FIGS. 6 to 10 are views for describing a configuration and operation method of an apparatus 20 for manufacturing a secondary battery to which a cutting unit 30 is applied according to embodiments of the present disclosure.

As illustrated, the apparatus 20 for manufacturing a secondary battery according to the present embodiment may include a transport unit, a winding unit, the cutting unit, and a separation prevention part.

The transport unit may transport an electrode plate 21, which is a cutting target, along a predetermined transport path and includes a plurality of transport rollers 23. Some transport rollers 23 are rollers having a driving force, and the remaining rollers do not have a driving force and may serve to only support the transport rollers tightly. The electrode plate 21 has a predetermined width and is a stack formed of a substrate and a mixture. The electrode plate 21 may be continuously transported along the transport path provided by the transport unit and wound around the winding unit 24.

The winding unit 24 may be rotated by power received from a winding unit driver 26 to wind the electrode plate 21. The electrode plate 21 wound around the winding unit 24 may be drawn out by an operator and moved to a subsequent process. The winding unit 24 may include a winding turret winding the electrode plate 21.

The winding unit driver 26 may be controlled by a control unit 28. The winding unit driver 26 may be operated by a control signal of the control unit 28 to rotate or not rotate the winding unit 24. The control unit 28 may control the on/off and rotational speed of the winding unit driver 26. In addition, the control unit 28 may transmit the control signal to the cutting unit 30. That is, the control unit 28 may be connected to an upper cutter driving module 43 and a first guide driving part 55, which will be described herein, to transmit the control signal.

Meanwhile, the cutting unit 30 may cut the electrode plate 21 being transported into a predetermined length unit. Since the jelly roll-type electrode assembly is formed by winding the electrode plate 21, a cutting length of the electrode plate 21 may vary depending on a diameter of the jelly roll being manufactured.

The electrode plate 21 cut by the cutting unit 30 may be wound around the winding unit 24 and then drawn out to the outside. In addition, the electrode plate 21 to be newly wound around the winding unit 24 among the cut electrode plates 21, that is, a "subsequent electrode plate", is newly wound in a state of being fixed on the empty winding unit 24.

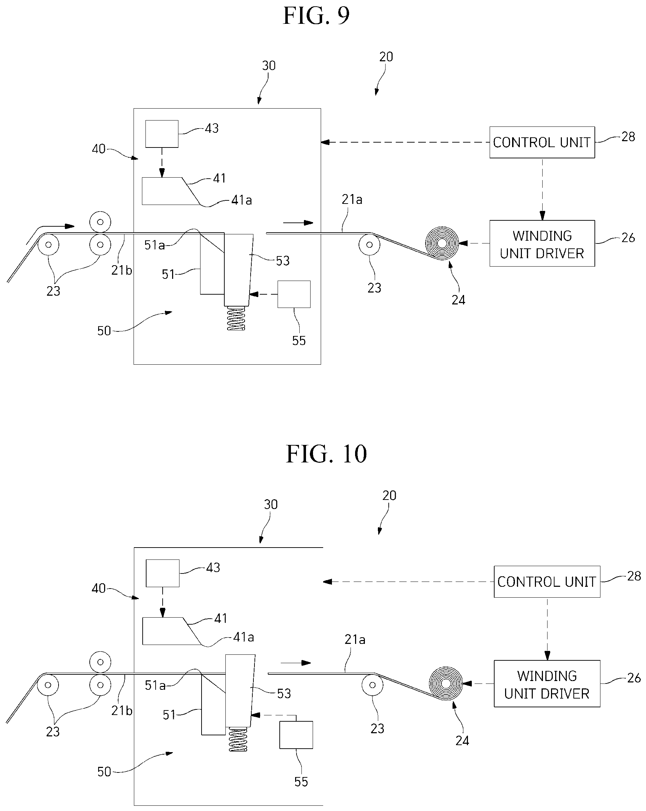

In this description, the subsequent electrode plate 21b (see FIG. 9) is an electrode plate following a "preceding electrode plate" wound around the winding unit 24 based on a time point at which a cutting portion of the electrode plate 21, which is continuously transported while being wound around the winding unit 24, is cut. In addition, a preceding electrode plate 21a (see FIG. 9) is wound around the winding unit 24 to form one jelly roll. In addition, the subsequent electrode plate 21b starts being newly wound around the winding unit.

Meanwhile, the cutting unit 30 may include a cutting part and a separation prevention part. The cutting part may comprise an upper cutter installed above the transport path of the electrode plate, and a lower cutter installed below the transport path to cut the electrode plate through cross motion with the upper cutter. In addition, the cutting part may include an upper cutting part 40 and a lower cutting part 50.

The upper cutting part 40 may include an upper cutter 41 and the upper cutter driving module 43. The upper cutter 41 is a blade in which a cutting edge 41a is formed at one side of a lower end portion thereof and may be installed to move upwardly and downwardly above the transport path of the electrode plate 21. The upward and downward movements of the upper cutter 41 may be implemented by the upper cutter driving module 43. In another embodiment, a stripper may be additionally applied to the upper cutting part 40 to elastically support the electrode plate 21.

In addition, the lower cutting part 50 may include a lower cutter 51. The lower cutter 51 may be disposed vertically below the upper cutter 41 with the electrode plate 21 interposed therebetween. The lower cutter 51 may have a cutting edge 51a on an upper end portion thereof. The lower cutter 51 may cut the electrode plate 21 through cross motion with the upper cutter 41. In another embodiment, a stripper that elastically supports the electrode plate upwardly may be additionally mounted on a side portion of the lower cutter 51.

The separation prevention part may support a front end portion of the subsequent electrode plate 21b in a transport direction to prevent the front end portion from sagging downwardly due to an action of gravity. That is, the separation prevention part supports the front end portion of the subsequent electrode plate in the transport direction toward the winding unit after cut by the cutting unit to prevent the electrode plate from deviating from the transport path toward the winding unit.

The separation prevention part may include a lower moving guide 53 and the first guide driving part 55. The lower moving guide 53 may support the lower cutter 51 while installed on the side portion of the lower cutter 51 and (e.g., vertically) move upwardly and downwardly. The lower cutter 51 may be supported by the lower moving guide 53 to firmly maintain the fixed state without shaking when cutting the electrode plate 21. The first guide driving part 55 may be configured to move the lower moving guide 53 upwardly and downwardly.

In addition, the lower moving guide 53 waits under the transport path of the electrode plate 21, and when cutting the electrode plate 21, the lower moving guide 53 may move upwardly to support the front end portion of the subsequent electrode plate 21b in the transport direction as illustrated in FIG. 10. The reason for supporting the front end portion is to prevent the front end portion from falling downwardly due to the action of gravity. That is, the subsequent electrode plate 21b is prevented from deviating from the normal transport path. A shape of the lower moving guide 53 which may perform such a role may be changed through various embodiments.

The first guide driving part 55 may simultaneously move the lower moving guide 53 upwardly when the upper cutter moves upwardly after the cutting unit cuts the electrode plate 21 so that the lower moving guide to provide an upward support force to the front end portion of the subsequent electrode plate 21b.

An operation of the apparatus 20 for manufacturing a secondary battery, which has the herein configuration, may be performed as follows.

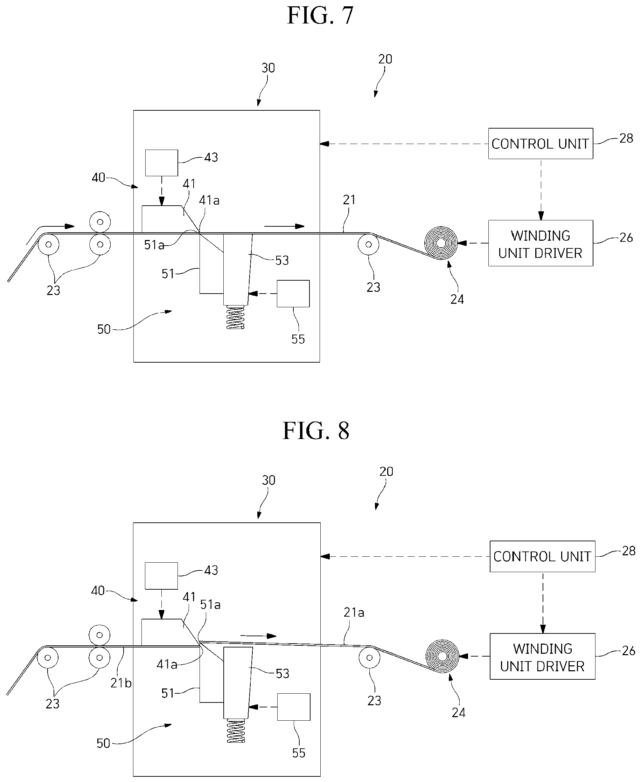

First, as illustrated in FIG. 6, the electrode plate 21 is transported in a direction of arrow a and wound around the winding unit 24. In this case, the upper cutter 41 may be moved upwardly, and the lower moving guide 53 may be moved downwardly. As described herein, when a point at which the electrode plate 21 is cut is positioned between the upper and lower cutters, the upper cutter 41 may move downwardly through the upper cutter driving module 43 and cut the electrode plate 21 as illustrated in FIGS. 7 and 8. The electrode plate 21 may be cut and divided into the preceding electrode plate 21a and the subsequent electrode plate 21b.

After the herein process is finished, the preceding electrode plate 21a may be wound around the winding unit 24, and the subsequent electrode plate 21b may be positioned above the lower cutter 51, as illustrated in FIG. 9, by the action of the tension, continuously applied to the electrode plate 21, i.e. the drive force provided by the driven transport rollers.

In addition, immediately after the electrode plate 21a is cut, as illustrated in FIG. 10, the upper cutter 41 and the lower moving guide 53 may move upwardly. The lower moving guide 53 can prevent the subsequent electrode plate 21b from sagging or rolling downwardly while moving in the transport direction.

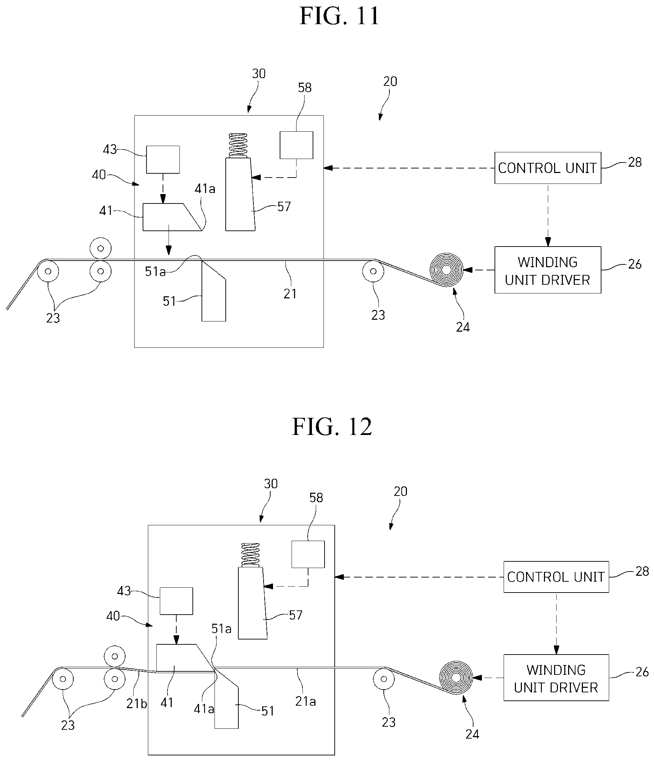

FIGS. 11 to 13 are views illustrating another example of the apparatus 20 for manufacturing a secondary battery according to embodiments of the present disclosure.

Hereinafter, the same reference numerals as the herein reference numerals denote the same members having the same functions, and overlapping description thereof will be omitted.

As illustrated, the cutting unit 30 may include an upper moving guide 57 and a second guide driving part 58. The upper moving guide 57 and the second guide driving part 58 may serve as the herein separation prevention part. The upper moving guide 57 may be positioned above the transport path of the electrode plate.

The upper moving guide 57 may be installed to move upwardly and downwardly on a side portion of the upper cutter 41. The upper moving guide 57 may be moved upwardly and downwardly by the second guide driving part 58. The second guide driving part 58 may be operated upon receiving the control signal of the control unit 28.

An operation of the apparatus 20 for manufacturing a secondary battery illustrated in FIGS. 11 to 13 may be performed as follows. First, as illustrated in FIG. 11, the electrode plate 21 is transported along the transport path. While the electrode plate is transported, when a point at which the electrode plate is to be cut is positioned between the upper cutter 41 and the lower cutter 51, the upper cutter 41 moves downwardly and performs cutting at a cutting target point. The upper cutter 41 may return to an original position thereof by moving upwardly immediately after cutting the electrode plate 21.

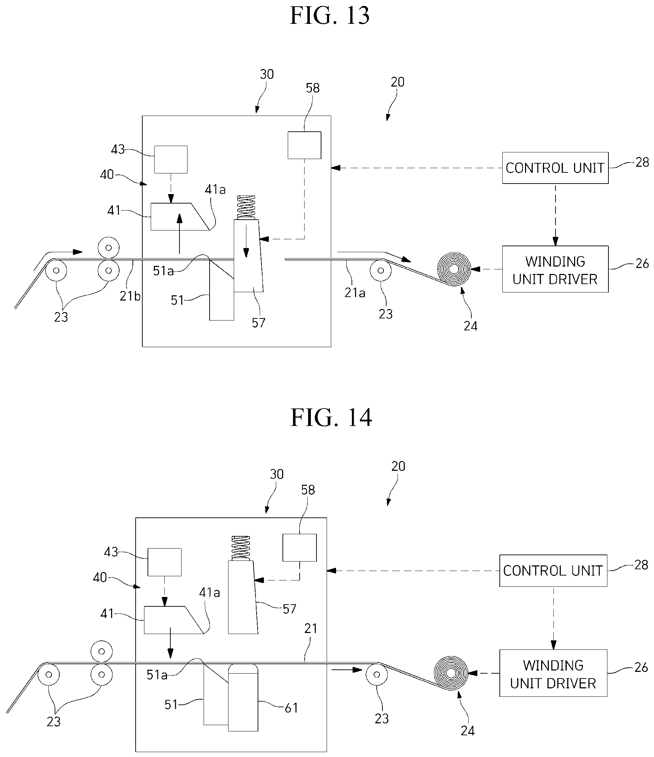

In addition, while the upper cutter 41 moves upwardly, the upper moving guide 57 may be moved downwardly by the second guide driving part 58 and, as illustrated in FIG. 13, the upper moving guide 57 may support the front end portion of the subsequent electrode plate 21b, so that the upper moving guide 57 provides an upward support force to the front end portion of the subsequent electrode plate 21b. That is, the front end portion of the subsequent electrode plate 21b can be prevented from sagging or rolling downwardly.

FIGS. 14 to 16 are views illustrating still another example of the apparatus for manufacturing a secondary battery according to embodiments of the present disclosure.

As illustrated in FIGS. 14 to 16, a lower fixed guide 61 may be further installed in the cutting unit 30.

The lower fixed guide 61 may be a fixed structure that is positioned on the side portion of the lower cutter 51 to fixedly support the lower cutter 51. For example, the lower fixed guide 61 supports the lower cutter 51 when cutting the electrode plate 21 to prevent the lower cutter 51 from shaking.

In addition, the lower fixed guide 61 may be positioned vertically under the upper moving guide 57. When the upper moving guide 57 moves downwardly, the upper moving guide 57 (e.g., a lower end portion of the upper moving guide 57) may be in contact with (directly or indirectly via the electrode plate) the lower fixed guide 61.

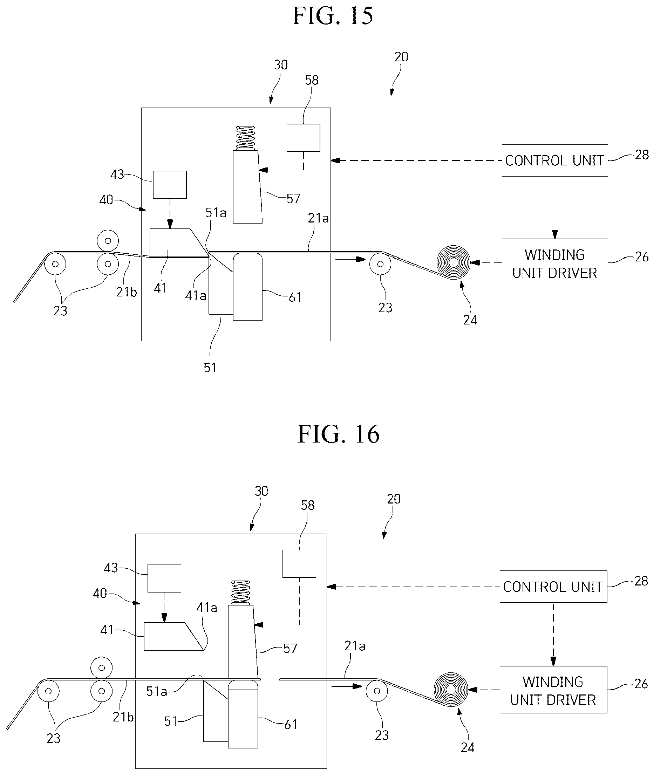

As illustrated in FIG. 16, the lower fixed guide 61 and the upper moving guide 57 may temporarily hold and fix a part of the front end portion of the subsequent electrode plate 21b. The front end portion of the subsequent electrode plate 21b may be simultaneously supported by the lower fixed guide 61 and the upper moving guide 57. Since the subsequent electrode plate 21b is doubly supported, the subsequent electrode plate can be supported more stably.

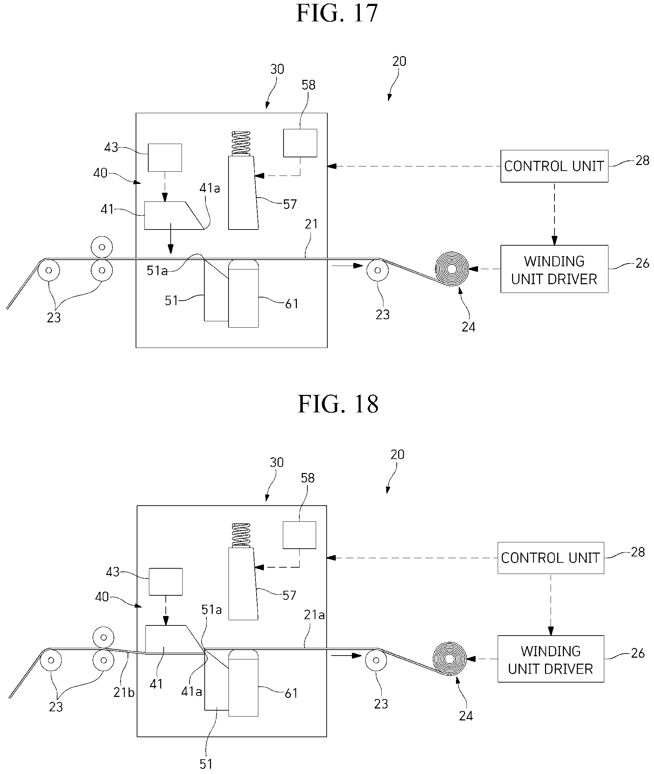

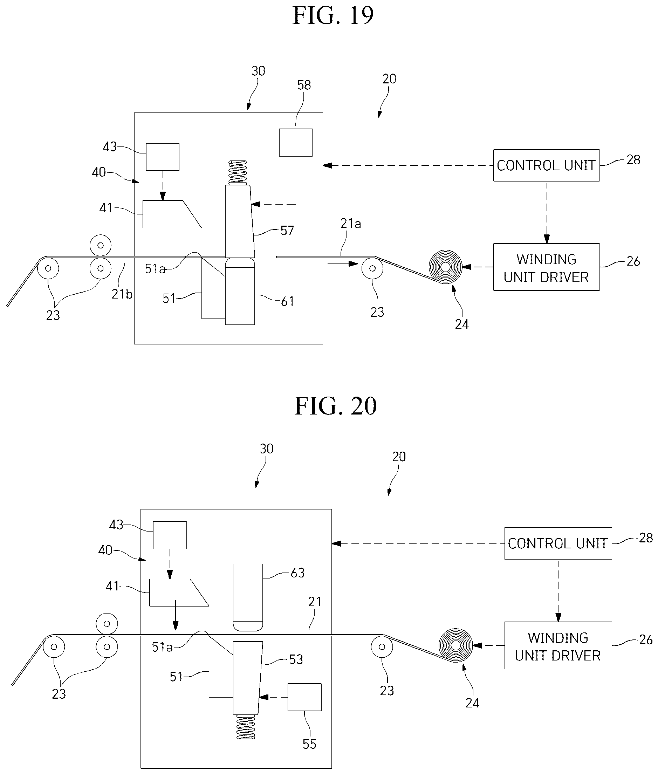

FIGS. 17 to 19 are views illustrating yet another example of the apparatus for manufacturing a secondary battery according to embodiments of the present disclosure. A structure of the cutting unit 30 of FIGS. 17 to 19 is the same as that of the cutting unit 30 of FIGS. 14 to 16. However, as illustrated in FIG. 19, there is a difference in that the upper moving guide 57 supports the front end portion of the subsequent electrode plate 21b while in contact with an upper end portion of the lower fixed guide 61, i.e. it is in direct contact, rather than indirect contact, with the lower fixed guide 61.

FIGS. 20 to 22 are views illustrating yet another example of the apparatus 20 for manufacturing a secondary battery according to embodiments of the present disclosure.

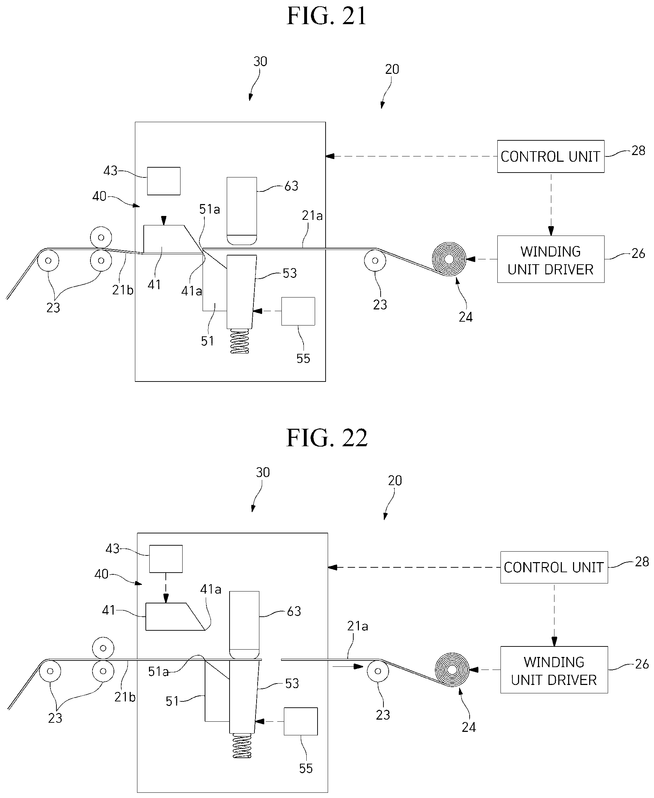

As illustrated, the upper fixed guide 63 may be fixedly mounted on the side portion of the upper cutter 41. The upper fixed guide 63 may be positioned vertically above the lower moving guide 53. In addition, the upper fixed guide 63 may be in contact with the lower moving guide 53 (either directly or indirectly) when the lower moving guide 53 moves upwardly. In addition, as illustrated in FIG. 22, the front end portion of the subsequent electrode plate 21b may be held and supported between the lower moving guide 53 and the upper fixed guide 63.

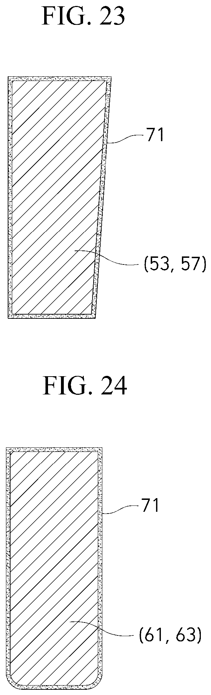

FIG. 23 is a cross-sectional view illustrating a modified example of a moving guide included in the apparatus 20 for manufacturing a secondary battery according to embodiments of the present disclosure.

As illustrated in FIG. 23, surfaces of the lower moving guide 53 or the upper moving guide 57 may be coated with an antistatic layer 71. The antistatic layer may serve to prevent slipping due to static electricity during operation. In another embodiment, the lower moving guide 53 and the upper moving guide 57 may be subjected to an antistatic treatment without being coated with the antistatic layer.

FIG. 24 is a cross-sectional view illustrating a modified example of a fixed guide included in the apparatus 20 for manufacturing a secondary battery according to embodiments of the present disclosure.

As illustrated, surfaces of the lower fixed guide 61 and the upper fixed guide 63 may also be coated with the antistatic layer 71. The antistatic layer 71 may serve to prevent slipping due to static electricity during operation. In another embodiment, the lower fixed guide 61 and the upper fixed guide 63 may not be coated with the antistatic layer 71 and may be directly subjected to an antistatic treatment.

According to an apparatus for manufacturing a secondary battery and an electrode plate cutting unit for manufacturing a secondary battery formed as described herein, by supporting a cut front end after cutting an electrode plate to prevent the electrode plate from falling down a normal transport path, it is possible to enable continuous cutting and prevent productivity from being lowered.

Although the present disclosure has been described herein with respect to embodiments thereof, the present disclosure is not limited thereto. Various modifications and variations can be made thereto by those skilled in the art within the scope of the present disclosure as defined by the appended claims and their equivalents.

## Claims

1. An apparatus for manufacturing a secondary battery, comprising:
a transport unit configured to transport an electrode plate along a transport path;
a winding unit configured to receive and wind the electrode plate transported by the transport unit; and
a cutting unit having a cutting part which is configured to cut the electrode plate that is transported, and a separation prevention part which is configured to support a front end portion of a subsequent electrode plate, which moves toward the winding unit in a transport direction after being cut by the cutting part, to prevent the subsequent electrode plate from deviating from the transport path toward the winding unit.

2. The apparatus as claimed in claim 1, wherein the cutting part comprises: an upper cutter installed above the transport path of the electrode plate; and a lower cutter installed below the transport path to cut the electrode plate through cross motion with the upper cutter, and
the separation prevention part comprises: a lower moving guide which is configured to support the lower cutter while installed on a side portion of the lower cutter and is movable upwardly and downwardly; and a first guide driving part configured to move the lower moving guide upwardly and downwardly.

3. The apparatus as claimed in claim 2, wherein, the first guide driving part is configured such that after the cutting part cuts the electrode plate, the first guide driving part moves the lower moving guide upwardly simultaneously when the upper cutter moves upwardly so that the lower moving guide provides an upward support force to the front end portion of the subsequent electrode plate.

4. The apparatus as claimed in claim 2, wherein the separation prevention part comprises:
an upper moving guide installed to be movable upwardly and downwardly on a side portion of the upper cutter; and
a second guide driving part configured to move the upper moving guide upwardly and downwardly.

5. The apparatus as claimed in claim 4, wherein the upper moving guide is positioned above the transport path of the electrode plate, and
the second guide driving part is configured such that after the cutting part cuts the electrode plate, the second guide driving part moves the upper moving guide downwardly when the upper cutter moves upwardly so that the upper moving guide provides an upward support force to the front end portion of the subsequent electrode plate.

6. The apparatus as claimed in claim 4, wherein a lower fixed guide, which is configured to fixedly support the lower cutter and to come into contact with the upper moving guide when the upper moving guide moves downwardly, is further installed vertically under the upper moving guide.

7. The apparatus as claimed in claim 2, wherein an upper fixed guide, which is configured to come into contact with the lower moving guide when the lower moving guide moves upwardly, is further installed vertically above the lower moving guide.

8. An electrode plate cutting unit comprising:
an upper cutter installed above a transport path of an electrode plate transported along the transport path;
a lower cutter installed below the transport path to cut the electrode plate; and
a separation prevention part which is configured to support a front end portion of the electrode plate cut by the upper cutter and the lower cutter to prevent the electrode plate from sagging downwardly and deviating from the transport path.

9. The electrode plate cutting unit as claimed in claim 8, wherein the separation prevention part is configured to support the front end portion of a subsequent electrode plate in a transport direction to prevent the front end portion from sagging downwardly due to an action of gravity.

10. The electrode plate cutting unit as claimed in claim 9, wherein the separation prevention part comprises:
a lower moving guide which is configured to support the lower cutter while installed on a side portion of the lower cutter and which is movable upwardly and downwardly; and
a first guide driving part configured to move the lower moving guide upwardly and downwardly.

11. The electrode plate cutting unit as claimed in claim 10, wherein, the first guide driving part is configured such that after the cutting part cuts the electrode plate, the first guide driving part moves the lower moving guide upwardly simultaneously when the upper cutter moves upwardly so that the lower moving guide provides an upward support force to the front end portion of the subsequent electrode plate.

12. The electrode plate cutting unit as claimed in claim 9, wherein the separation prevention part comprises:
an upper moving guide installed to move upwardly and downwardly on a side portion of the upper cutter; and
a second guide driving part configured to move the upper moving guide upwardly and downwardly.

13. The electrode plate cutting unit as claimed in claim 12, wherein the upper moving guide is positioned above the transport path of the electrode plate, and
the second guide driving part is configured such that after the cutting part cuts the electrode plate, the second guide driving part moves the upper moving guide downwardly when the upper cutter moves upwardly so that the upper moving guide provides an upward support force to the front end portion of the subsequent electrode plate.

14. The electrode plate cutting unit as claimed in claim 12, wherein a lower fixed guide, which is configured to fixedly support the lower cutter and to come into contact with the upper moving guide when the upper moving guide moves downwardly, is further installed vertically under the upper moving guide.

15. The electrode plate cutting unit as claimed in claim 10, wherein an upper fixed guide, which is configured to come into contact with the lower moving guide when the lower moving guide moves upwardly, is further installed vertically above the lower moving guide.
